# EUROPEAN PATENT SPECIFICATION

(11) **EP 2 215 019 B1**
(45) Date of publication and mention of the grant of the patent: **12.09.2012**
(21) Application number: 07866771.4
(22) Date of filing: 26.11.2007
(51) Int. Cl.: C02F 3/02, C02F 3/10, C02F 3/06

(54) **UNDERWATER STRUCTURE FOR BIOPURIFICATION OF WATERS**
UNTERWASSERSTRUKTUR ZUR BIOREINIGUNG VON WASSER
STRUCTURE SOUS-MARINE POUR LA PURIFICATION BIOLOGIQUE DE L'EAU

(43) Date of publication of application: 11.08.2010
(73) Proprietor: TECNOREEF S.r.l., 44121 Ferrara (FE) (IT)
(72) Inventor: DANESE, Giorgio, I-37127 Verona (IT)
(74) Representative: Ponchiroli, Simone
(86) International application number: PCT/IT2007/000823
(87) International publication number: WO 2009/069156

(56) References cited:
- JP-A- 8 276 198
- JP-A- 11 070 306
- US-A1- 2004 065 609

## Description

### Technical Field

The present invention relates to an underwater structure for biopurification of waters.

The field of the invention is that of equipment used to purify sea, river or lake waters using micro-organisms.

### Background Art

As is known, the need exists to purify seabeds or areas where there is little fish fauna due to water pollution which thins out aquatic vegetation with the consequent dispersion of most aquatic species.

This problem is particularly bad along coasts where effluent disposal often takes place by pouring it into the sea, for lower costs and easier management. Said pouring into the sea is carried out using pipes which in most cases are made without taking into account sea currents and therefore the effluent often comes to shore with unpleasant health and hygiene consequences. For this reason, the prior art comprises the production directly on the seabed of a filtering system, at the outlet of the effluent pouring pipes, as described in patent US 6,821,423.

In that case, a structure is made, positioned at the pipe outlet, which forces the sewage to pass through various filtering processes, making use of the fact that the density of the sewage is lower than that of the surrounding sea water.

Said solution has several disadvantages because, in order to operate, it must be installed only at the outlet of the sewage discharge pipes, thus limiting purification of the waters only to the zone reached by the pipe which pours out the effluent.

Moreover, said solution has a complex, heavy structure, since it consists of a load-bearing framework with a plurality of containment bulkheads. Therefore, there may be difficulties both transporting and assembling it.

Other solutions for the biopurification of waters are also known, by laying on the seabed or on river or lake beds modular blocks of various shapes and made of various materials for promoting the repopulation and purification of the waters (for example, as described in patents JP8276198, JP8068034, JP2003079266, JP11077078, JP9088040, JP2004290941, JP4059097, JP2083088, JP2004195277, JP2005118653, WO2004046048 JP2005095773, JP2005282031, JP2003034920, JP2004293242, JP2003082261, JP2001288731, JP10046540, JP2006150331, WO2005108680 JP11319815, JP11229342 JP10088547, JP2001098528, JP6262190, JP9228338, and JP9141280).

All of these solutions have disadvantages because they either have very complex and heavy structures or because the structures are made of very special materials.

There are also solutions in which the structures for the purifying organisms are synthetic grasses / mosses (for example, as described in patents JP11347584, JP8004097, JP7171589, CN88105471, US2004202855) or porous materials (for example, as described in patents JP2003193449, JP2006057449 and JP2005154163) or balls of clay (for example, as described in patents CN1378982 and DE4200026).

There are also solutions with a flexible form, modular mats and the like, designed to coat or cover rigid elements (for example, as described in patents JP2001248044, US5522985, US5217788, JP9066291, JP2194895, FR2842070, JP2005138095).

All of these solutions have disadvantages because they have structures with limited purifying capacities.

### Disclosure of the Invention

The main aim of the present invention is therefore to provide an underwater structure for biopurification of waters which has high purification capacities.

The present invention also has for an aim to provide a structure that is extremely simple and easily stored and transported.

These aims and others, more apparent in the description which follows, are achieved by an underwater structure for biopurification of waters comprising the technical features described in one or more of the claims herein.

Further features and advantages of the invention are more apparent from the detailed description of a preferred, non-limiting embodiment of an underwater structure for biopurification of waters according to the present invention.

### Brief Description of the Drawings

The invention is described below with reference to the accompanying drawings, provided by way of example only and, therefore, without limiting the scope of the invention, and in which:

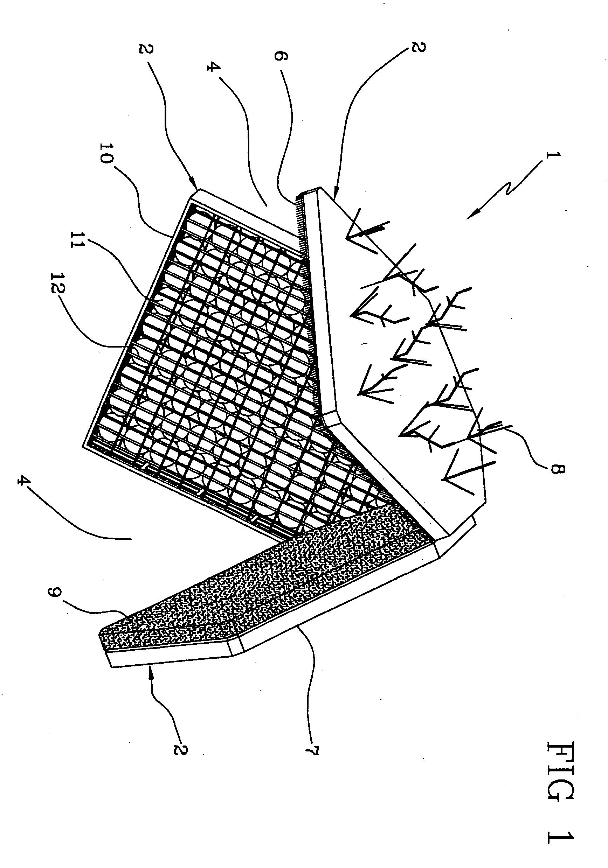

Figure 1 is a perspective bottom view of an underwater structure for biopurification of waters made in accordance with the present invention;

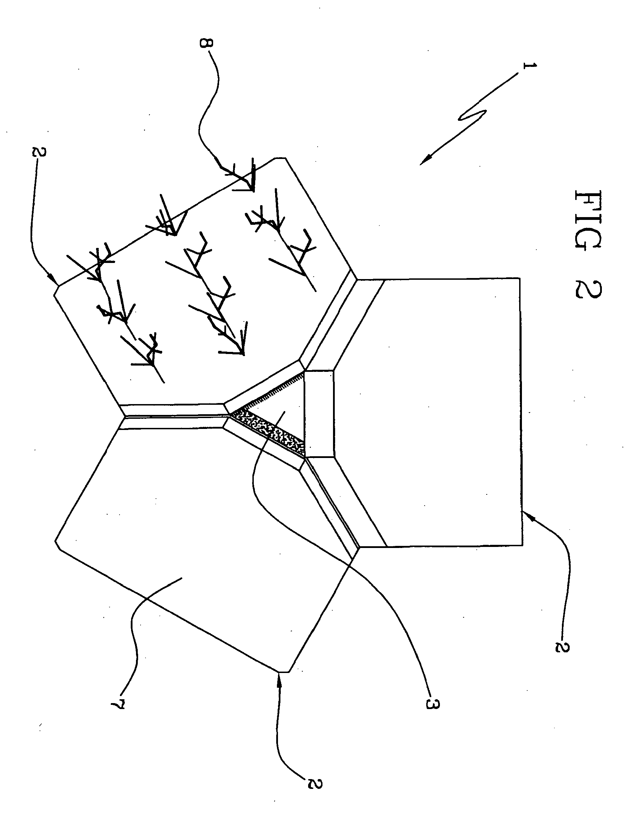

Figure 2 is a top view of the underwater structure for biopurification of waters of Figure 1;

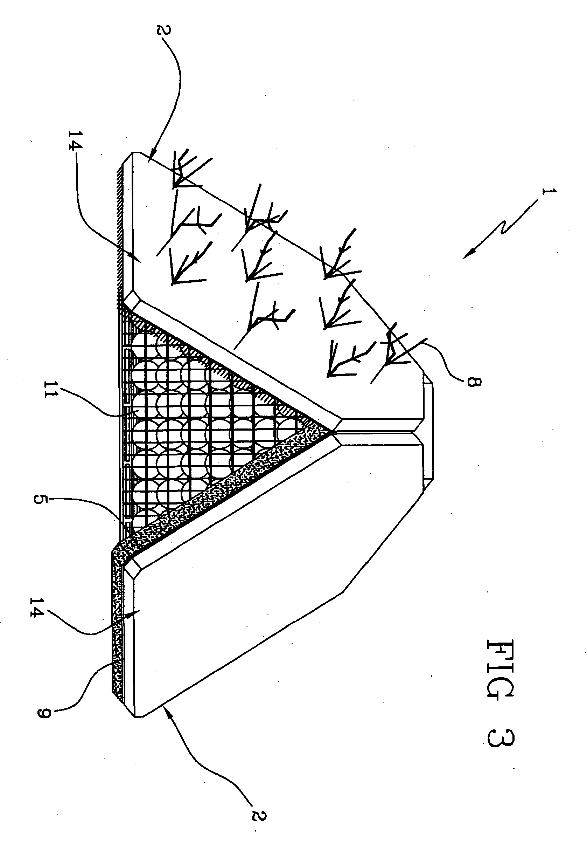

Figure 3 is a side view of the underwater structure for biopurification of waters of Figure 1;
Figure 4 is a side view of a first modular element of the underwater structure for biopurification of waters of Figure 1;
Figure 5 is an enlarged detail of the modular element from Figure 4;
Figure 6 is a side view of a second modular element of the underwater structure for biopurification of waters of Figure 1;
Figure 7 is an enlarged detail of the modular element from Figure 6;
Figure 8 is a perspective view of a third modular element of the underwater structure for biopurification of waters of Figure 1; and
Figure 9 is an enlarged detail of the modular element from Figure 8.

### Detailed Description of the Preferred Embodiments of the Invention

With reference to the accompanying drawings, the numeral 1 denotes an underwater structure for biopurification of waters.

Said underwater structure 1 is therefore designed to be positioned on seabeds and substantially has the shape of a pyramid.

It is made by connecting at least three modular elements 2 substantially extending in such a way that they are flat. The modular elements 2 are set at an angle and fixed relative to each other, preferably using brackets, along the sides close to the top of the pyramid-shaped structure. The modular elements 2 are fixed in such a way as to leave an upper central opening 3, at the top of the pyramid, and at least one lateral opening 4 between two modular elements 2, at the base on which the pyramid-shaped structure rests. In accordance with the embodiment illustrated in the accompanying drawings, the structure consists of three modular elements 2 forming three lateral openings 4.

As illustrated in the accompanying drawings, in accordance with a preferred embodiment, the modular elements 2 have a polygonal shape to facilitate resting on the seabed and hooking between one modular element 2 and the adjacent modular element.

Moreover, the modular elements 2 have a surface that is mainly closed to prevent or minimise the passage of water through the elements.

The underwater structure 1 can be positioned on the seabed with a modular element 2 substantially orthogonal to the direction of the sea current. The sea current, which enters through one or more lateral openings 4, strikes the modular element 2 orthogonal to the current. Since the modular element 2 has a surface that is mainly closed, the sea current is forced to flow along the inner walls 5 of the modular elements 2 and to exit through the upper central opening 3.

In this way, thanks to the sea current, there is a natural generation of a circulation of sea water which enters through the lateral openings 4, strikes the inner walls 5 and exits through the upper central opening 3.

The inner walls 5 of the modular elements 2 are equipped with means for biopurification of waters, which in practice are struck by the automatically generated flow of sea water.

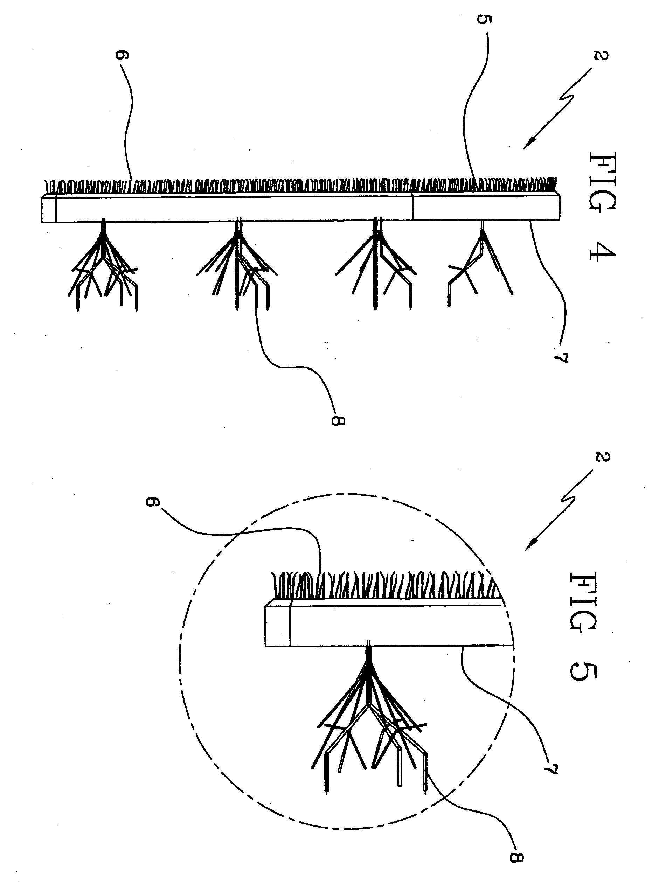

As illustrated in Figures 4 and 5, in accordance with a first embodiment, the inner wall 5 of the modular element 2 is coated with a mat of artificial grass 6. The presence of said means for biopurification of waters facilitates the adhesion and biological growth of micro-organisms which clean the waters.

Moreover, the modular element 2 has an outer wall 7, on the opposite side to the inner wall 5. On the outer wall there are artificial twigs 8, designed to facilitate the formation of algae and other plant organisms and subsequent population by fish and other organisms.

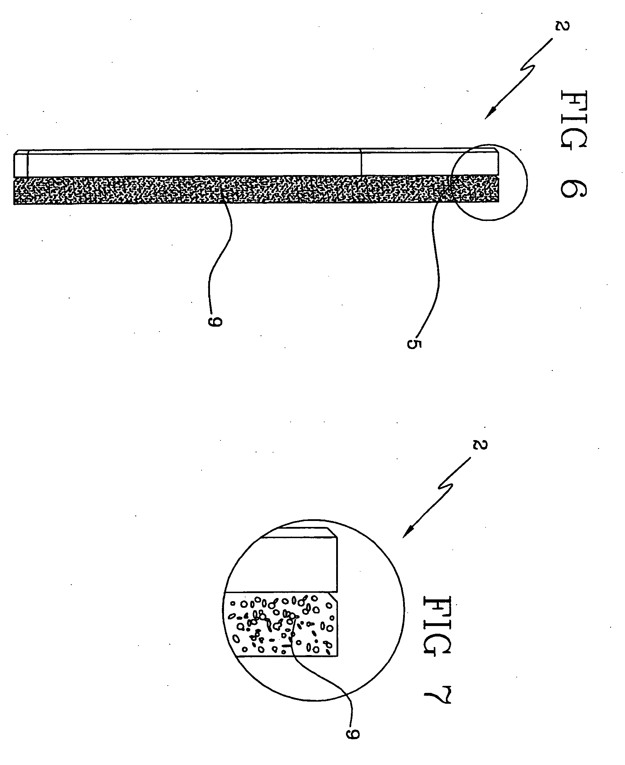

As illustrated in Figures 6 and 7, in accordance with a second embodiment, the inner wall 5 of the modular element 2 is coated with a porous layer 9. Said porous layer 9 is in the form of a sponge.

Advantageously, the porous layer 9 can be created by immersing a soft sponge in a water and cement bath, once or more, even with drying times between one immersion and the next. In this way, the cement is easily deposited on the walls of the sponge without blocking the various cavities and, when the sponge dries, the cement gives them mechanical stiffness.

Alternatively, instead of water and cement, other liquid products may be used which, upon drying, stiffen the sponge.

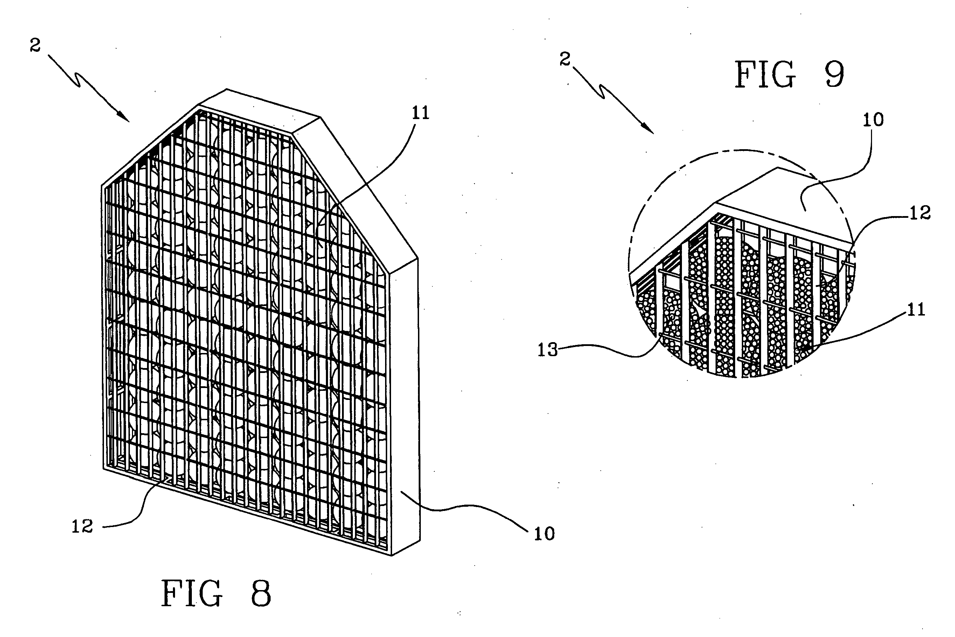

As illustrated in Figures 8 and 9, in accordance with a third embodiment, the inner wall 5 of the modular element 2 has a containment structure 10 which contains elements 11. The containment structure 10 is preferably a metal structure and is closed by a containment grille 12 which can be opened.

In accordance with this embodiment, the elements 11 are porous and substantially consist of spherical bodies, each consisting of a plurality of mini-balls 13, even of different sizes. In this way, zones are created which have greater water circulation, between one element 11 and another, as well as zones with less water circulation, between one mini-ball 13 and another inside the porous element, thus creating habitats for different micro-organisms to take root and grow.

The elements 11 can advantageously be made by compacting a plurality of mini-balls 13, for example balls of clay, immersed once or more in a water and cement solution, similarly to the process used to make the porous layer 9, indicated above.

The possibility of opening the containment grille 12 allows easy substitution of the elements 11, once they are no longer useful for biopurification of water. After a predetermined period, the sea population which grows on these means for biopurification of waters stabilises and no longer performs the task of purifying sea water.

The outer wall 7 of the modular elements 2 of the second embodiment (Figures 4 and 5) and the third embodiment (Figures 6 and 7) are also advantageously fitted with artificial twigs 8.

Therefore, biopurification of waters takes place thanks to the fact that the various means (which, in accordance with the various embodiments presented, are the mat of artificial grass 6, the porous layer 9 and the elements 11) are used to facilitate the adhesion, growth and propagation of micro-organisms. Said micro-organisms have the capacity to transform the polluting substances present in the sea into substances which feed other sea organisms. In this way, settlement of the micro-organisms is also followed by spontaneous settlement of algae, fish or the like.

Moreover, to speed up the start of the biopurification process, micro-organisms may be artificially planted on the various means for biopurification of waters before the underwater structure 1 is placed on the seabed.

Each underwater structure I consists of modular elements 2 in accordance with the three embodiments described above, in any possible combination. The modular elements 2 in an underwater structure 1 may, for example, all consist of the same embodiment or each be a different embodiment.

The modular elements 2 comprise a load-bearing structure 14 which supports the means for biopurification of waters. The load-bearing structure 14 is preferably made of concrete, in particular, for modular elements 2 in accordance with the first and the second embodiments, or metal, in particular for modular elements 2 in accordance with the third embodiment.

Moreover, the underwater structure 1 may be assembled on the surface and subsequently be put in position, or the individual components may be placed on the seabed then assembled, with operations requiring very little time and simply consisting of bringing the modular elements near one another and fixing them together.

The underwater structure for biopurification of waters disclosed achieves the preset aims.

First, the underwater structure has a shape made in such a way that it has a high water purification capacity.

Secondly, the underwater structure is very simple to transport, since it consists of modular elements, substantially having similar dimensions, which can therefore easily be stacked for transportation. Moreover, assembly of the underwater structure is also very fast and simple.

It should also be noticed that its simple construction allows the structure to be made with competitive costs compared with underwater structures for biopurification of waters with similar operation.

## Claims

1. An underwater structure for biopurification of waters (1), **characterised:**
**in that** it comprises at least three modular elements (2) extending in such a way that they are substantially flat, have a surface that is mainly closed to prevent or minimise the passage of water through the elements and are set at an angle and connected to each other in such a way as to obtain a pyramid-shaped structure with an upper central opening (3) and at least one lateral opening (4) between two modular elements (2);
**in that** at least one of the modular elements (2) has an inner wall (5) equipped with means for biopurification of waters; and
**in that** the underwater structure (1) can be positioned on a seabed with a modular element (2) positioned in such a way that it is substantially orthogonal to the direction of the sea current, so that a flow of water is generated which enters the underwater structure (1) through the lateral opening (4) and exits through the upper central opening (3).

2. The underwater structure for biopurification of waters (1) according to claim 1, **characterised in that** the means for biopurification of water comprise a mat of artificial grass (6) for promoting the biological growth of micro-organisms.

3. The underwater structure for biopurification of waters (1) according to claim 1 or 2, **characterised in that** the means for biopurification of water comprise a porous layer (9).

4. The underwater structure for biopurification of waters (1) according to claim 3, **characterised in that** the porous layer (9) comprises a sponge coated with a protective layer.

5. The underwater structure for biopurification of waters (1) according to claim 3, **characterised in that** the porous layer (9) comprises a plurality of mini-balls (13) compacted together.

6. The underwater structure for biopurification of waters (1) according to any of the foregoing claims, **characterised in that** the means for biopurification of water comprise a containment structure (10) filled with elements (11).

7. The underwater structure for biopurification of waters (1) according to claim 6, **characterised in that** the elements (11) are porous.

8. The underwater structure for biopurification of waters (1) according to claim 7, **characterised in that** the elements (11) comprise a plurality of sponges coated with a protective layer.

9. The underwater structure for biopurification of waters (1) according to claim 6 or 7, **characterised in that** the elements (11) comprise a plurality of mini-balls (13) compacted together.

10. The underwater structure for biopurification of waters (1) according to any of the claims from 6 to 9, **characterised in that** the containment structure (10) has a containment grille (12) for the elements (11).

11. The underwater structure for biopurification of waters (I) according to claim 10, **characterised in that** the containment grille (12) can be opened.

12. The underwater structure for biopurification of waters (1) according to any of the foregoing claims, **characterised in that** at least one of the modular elements (2) also has an outer wall (7) fitted with artificial twigs (8) to facilitate the growth of algae.

13. The underwater structure for biopurification of waters (1) according to any of the foregoing claims, **characterised in that** the modular elements (2) have a substantially polygonal shape.

14. The underwater structure for biopurification of waters (1) according to any of the foregoing claims, **characterised in that** the modular elements (2) comprise a load-bearing structure (14) on which the means for biopurification of waters are applied.

15. The underwater structure for biopurification of waters (1) according to claim 14, **characterised in that** the load-bearing structure (14) is made of concrete.

16. The underwater structure for biopurification of waters (1) according to claim 14, **characterised in that** the load-bearing structure (14) is made of metal.

17. The underwater structure for biopurification of waters (1) according to any of the foregoing claims, **characterised in that** all of the modular elements (2) have an inner wall (5) equipped with means for biopurification of waters.

18. The underwater structure for biopurification of waters (1) according to any of the foregoing claims, **characterised in that** there are micro-organisms planted in the means for biopurification of water.

## Patentansprüche

1. Unterwasserstruktur zur Bioreinigung von Wasser (1), **dadurch gekennzeichnet:**
**Dass** sie wenigstens drei modulare Elemente (2) enthält, die sich auf solche Weise erstrecken, dass sie im wesentlichen flach sind, eine hauptsächlich geschlossene Oberfläche haben, um das Durchlassen von Wasser durch die Elemente zu verhindern oder zu minimieren, und die in einem Winkel angeordnet sind und sich miteinander auf solche Weise verbinden, dass eine pyramidenförmige Struktur mit einer oberen mittleren Öffnung (3) und wenigstens einer seitlichen Öffnung (4) zwischen zwei modularen Elementen (2) erhalten wird;
**dass** wenigstens eins der modularen Elemente (2) eine innere Wand (5) aufweist, versehen mit Mitteln zur Bioreinigung von Wasser; und
**dass** die Unterwasserstruktur (1) auf einem Meeresboden angeordnet werden kann, und zwar mit einem modularen Element (2) auf solche Weise positioniert, dass es im wesentlichen rechtwinklig zur Strömungsrichtung der See positioniert ist, so dass ein Wasserfluss erzeugt wird, welcher in die Unterwasserstruktur (1) durch die seitliche Öffnung (4) eintritt und durch die obere mittlere Öffnung (3) austritt.

2. Unterwasserstruktur zur Bioreinigung von Wasser (1) nach Patentanspruch 1, **dadurch gekennzeichnet, dass** die Mittel zur Bioreinigung von Wasser eine Matte aus künstlichem Gras (6) enthalten, um das biologische Wachstum von Mikroorganismen zu fördern.

3. Unterwasserstruktur zur Bioreinigung von Wasser (1) nach Patentanspruch 1 oder 2, **dadurch gekennzeichnet, dass** die Mittel zur Bioreinigung von Wasser eine poröse Schicht (9) enthalten.

4. Unterwasserstruktur zur Bioreinigung von Wasser (1) nach Patentanspruch 3, **dadurch gekennzeichnet, dass** die poröse Schicht (9) einen Schwamm enthält, der mit einer Schutzschicht überzogen ist.

5. Unterwasserstruktur zur Bioreinigung von Wasser (1) nach Patentanspruch 3, **dadurch gekennzeichnet, dass** die poröse Schicht (9) eine Anzahl von dicht angeordneten Minikugeln (13) enthält.

6. Unterwasserstruktur zur Bioreinigung von Wasser (1) nach einem jeden vorstehenden Patentansprüche, **dadurch gekennzeichnet, dass** die Mittel zur Bioreinigung von Wasser eine Aufnahmestruktur (10) enthält, die mit Elementen (11) gefüllt ist.

7. Unterwasserstruktur zur Bioreinigung von Wasser (1) nach Patentanspruch 6, **dadurch gekennzeichnet, dass** die Elemente (11) porös sind.

8. Unterwasserstruktur zur Bioreinigung von Wasser (1) nach Patentanspruch 7, **dadurch gekennzeichnet, dass** die Elemente (11) eine Anzahl von Schwämmen enthalten, die mit einer Schutzschicht überzogen sind.

9. Unterwasserstruktur zur Bioreinigung von Wasser (1) nach Patentanspruch 6 oder 7, **dadurch gekennzeichnet, dass** die Elemente (11) eine Anzahl von dicht angeordneten Minikugeln (13) enthalten.

10. Unterwasserstruktur zur Bioreinigung von Wasser (1) nach einem jeden der vorstehenden Patentansprüche von 6 bis 9, **dadurch gekennzeichnet, dass** die Aufnahmestruktur (10) ein Haltegitter (12) für die Elemente (11) enthält.

11. Unterwasserstruktur zur Bioreinigung von Wasser (1) nach Patentanspruch 10, **dadurch gekennzeichnet, dass** das Haltegitter (12) geöffnet werden kann.

12. Unterwasserstruktur zur Bioreinigung von Wasser (1) nach einem jeden der vorstehenden Patentansprüche, **dadurch gekennzeichnet, dass** wenigstens eins der modularen Elemente (2) auch eine Aussenwand (7) aufweist, versehen mit künstlichen Verästelungen (8), um das Wachstum von Algen zu fördern.

13. Unterwasserstruktur zur Bioreinigung von Wasser (1) nach einem jeden der vorstehenden Patentansprüche, d**adurch gekennzeichnet,** dass die modularen Elemente (2) eine im wesentlichen mehreckige Form haben.

14. Unterwasserstruktur zur Bioreinigung von Wasser (1) nach einem jeden der vorstehenden Patentansprüche, **dadurch gekennzeichnet, dass** die modularen Elemente (2) eine tragende Struktur (14) enthalten, an welcher die Mittel zur Bioreinigung von Wasser angebracht werden.

15. Unterwasserstruktur zur Bioreinigung von Wasser (1) nach Patentanspruch 14, **dadurch gekennzeichnet, dass** die tragende Struktur (14) aus Beton hergestellt ist.

16. Unterwasserstruktur zur Bioreinigung von Wasser (1) nach Patentanspruch 14, **dadurch gekennzeichnet, dass** die tragende Struktur (14) aus Metall hergestellt ist.

17. Unterwasserstruktur zur Bioreinigung von Wasser (1) nach einem jeden vorstehenden Patentansprüche, **dadurch gekennzeichnet, dass** alle modularen Elemente (2) eine Innenwand (5) haben, versehen mit Mitteln zur Bioreinigung von Wasser.

18. Unterwasserstruktur zur Bioreinigung von Wasser (1) nach einem jeden der vorstehenden Patentansprüche, **dadurch gekennzeichnet, dass** Mikroorganismen vorhanden sind, eingepflanzt in die Mittel zur Bioreinigung von Wasser.

## Revendications

1. Une structure sous-marine pour la purification biologique de l'eau (1), **caractérisée :**
**en ce qu'**elle comprend au moins trois éléments modulaires (2) s'étendant de manière à ce qu'ils soient essentiellement plats, aient une surface qui est essentiellement fermée pour empêcher ou minimiser le passage d'eau à travers les éléments et soient disposés de biais et soient raccordés entre eux afin d'obtenir une structure pyramidale avec une ouverture centrale supérieure (3) et au moins une ouverture latérale (4) entre deux éléments modulaires (2) ;
**en ce qu'**au moins un des éléments modulaires (2) a une paroi intérieure (5) qui est équipée de moyens pour la purification biologique de l'eau ; et
**en ce que** la structure sous-marine (1) peut être placée sur un fond marin avec un élément modulaire (2) positionné de manière à être essentiellement orthogonal à la direction du courant marin, de sorte qu'un flux d'eau est généré qui entre dans la structure sous-marine (1) à travers l'ouverture latérale (4) et sort à travers l'ouverture centrale supérieure (3).

2. La structure sous-marine pour la purification biologique de l'eau (1) selon la revendication 1, **caractérisée en ce que** les moyens pour la purification biologique de l'eau comprennent un tapis d'herbe artificielle (6) pour favoriser la croissance biologique de micro-organismes.

3. La structure sous-marine pour la purification biologique de l'eau (1) selon la revendication 1 ou 2, **caractérisée en ce que** les moyens pour la purification biologique de l'eau comprennent une couche poreuse (9).

4. La structure sous-marine pour la purification biologique de l'eau (1) selon la revendication 3, **caractérisée en ce que** la couche poreuse (9) comprend une éponge revêtue d'une couche de protection.

5. La structure sous-marine pour la purification biologique de l'eau (1) selon la revendication 3, **caractérisée en ce que** la couche poreuse (9) comprend une pluralité de mini-billes (13) compactées ensemble.

6. La structure sous-marine pour la purification biologique de l'eau (1) selon l'une quelconque des revendications précédentes, **caractérisée en ce que** les moyens pour la purification biologique de l'eau comprennent une structure de confinement (10) remplie d'éléments (11).

7. La structure sous-marine pour la purification biologique de l'eau (1) selon la revendication 6, **caractérisée en ce que** les éléments (11) sont poreux.

8. La structure sous-marine pour la purification biologique de l'eau (1) selon la revendication 7, **caractérisée en ce que** les éléments (11) comprennent une pluralité d'éponges revêtues d'une couche de protection.

9. La structure sous-marine pour la purification biologique de l'eau (1) selon la revendication 6 ou 7, **caractérisée en ce que** les éléments (11) comprennent une pluralité de mini-billes (13) compactées ensemble.

10. La structure sous-marine pour la purification biologique de l'eau (1) selon l'une quelconque des revendications de 6 à 9, **caractérisée en ce que** la structure de confinement (10) a une grille (12) de confinement des éléments (11).

11. La structure sous-marine pour la purification biologique de l'eau (1) selon la revendication 10, **caractérisée en ce que** la grille de confinement (12) peut être ouverte.

12. La structure sous-marine pour la purification biologique de l'eau (1) selon l'une quelconque des revendications précédentes, **caractérisée en ce qu'**au moins un des éléments modulaires (2) a également une paroi extérieure (7) qui est équipées de rameaux artificiels (8) pour favoriser la croissance d'algues.

13. La structure sous-marine pour la purification biologique de l'eau (1) selon l'une quelconque des revendications précédentes, **caractérisée en ce que** les éléments modulaires (2) ont une forme essentiellement polygonale.

14. La structure sous-marine pour la purification biologique de l'eau (1) selon l'une quelconque des revendications précédentes, **caractérisée en ce que** les éléments modulaires (2) comprennent une structure porteuse (14) sur laquelle sont appliqués les moyens pour la purification biologique de l'eau.

15. La structure sous-marine pour la purification biologique de l'eau (1) selon la revendication 14, **caractérisée en ce que** la structure porteuse (14) est réalisée en béton.

16. La structure sous-marine pour la purification biologique de l'eau (1) selon la revendication 14, **caractérisée en ce que** la structure porteuse (14) est réalisée en métal.

17. La structure sous-marine pour la purification biologique de l'eau (1) selon l'une quelconque des revendications précédentes, **caractérisée en ce que** tous les éléments modulaires (2) ont une paroi intérieure (5) qui est équipée de moyens pour la purification biologique de l'eau.

18. La structure sous-marine pour la purification biologique de l'eau (1) selon l'une quelconque des revendications précédentes, **caractérisée en ce que** des micro-organismes sont plantés dans les moyens pour la purification biologique de l'eau.
